# EUROPEAN PATENT APPLICATION

(11) **EP 4 131 495 A1**
(43) Date of publication of application: **08.02.2023**
(21) Application number: 22188747.4
(22) Date of filing: 04.08.2022
(51) Int. Cl.: H01M 4/48, H01M 4/58, H01M 10/052, H01M 50/204, H01M 10/04

(54) **BATTERY PACK**

(30) Priority: 04.08.2021 KR 20210102486
(71) Applicant: SK On Co., Ltd., Seoul 03161 (KR)
(72) Inventor: LEE, Jong Hyeok, 34124 Daejeon (KR); JO, Yoon Ji, 34124 Daejeon (KR); HWANG, Chang Mook, 34124 Daejeon (KR)
(74) Representative: Stolmár & Partner Patentanwälte PartG mbB

(57) **Abstract**

A battery pack (100) including heterogeneous secondary batteries includes: a first battery set (110) in which a plurality of first secondary batteries (111) are stacked; and a second battery set (120) in which a plurality of second secondary batteries (121) are stacked, in which each of the first battery set and the second battery set is formed of a plurality, and the battery pack has an arrangement structure in which the plurality of first battery sets and the plurality of second battery sets are alternately stacked in one direction. The two battery sets may have different thermal stability or energy densities characteristics.

## Description

### TECHNICAL FIELD

The following disclosure relates to a battery pack, and more particularly, to a battery pack having an arrangement structure in which heterogeneous secondary batteries are alternately arranged with each other.

### BACKGROUND

Recently, secondary batteries have been widely used not only in small devices such as portable electronic devices, but also in medium-large devices such as automobiles and power storage devices. When used in such medium-large devices, a large number of secondary batteries are electrically connected to increase capacity and output.

Moreover, as the need for a large-capacity structure increases, the demand for a battery pack including a plurality of secondary batteries electrically connected in series and/or in parallel is increasing. In order to configure a high-current, high-capacity battery pack in a smaller volume, gaps between a plurality of electrically connected and extended secondary batteries may be often densely arranged.

In particular, such a battery pack may cause accidents in which a plurality of secondary batteries ignite or explode due to specific factors (short-circuit occurrence, malfunction or configuration defect, etc.) or secondary batteries ignite or explode due to an external shock. Since the plurality of secondary batteries in the battery pack are arranged very adjacent to each other, even when one secondary battery is ignited or exposed, thermal propagation to other adjacent secondary batteries is possible through a high-temperature gas or flame, so a secondary explosion or secondary ignition may occur, or when a predetermined critical temperature is exceeded, a thermal runaway situation may occur.

### SUMMARY

One embodiment of the present invention is directed to providing a battery pack having a structure in which secondary batteries having safety against thermal runaway are arranged between secondary batteries having a relatively high energy density in a battery pack including heterogeneous batteries.

In one general aspect, a battery pack including heterogeneous secondary batteries may include: a first battery set including at least one first secondary battery having a fitst cathode material, wherein the first battery set has first outer surfaces; and a second battery set including at least one second secondary battery having a second cathode material different from the first cathode material of the first secondary battery, wherein the second battery set has second outer surfaces, in which the first battery set and the second battery set have one surface of the first outer surfaces disposed adjacent to another surface of the second outer surfaces.

The first cathode material of the first secondary battery may include lithium-metal oxide, the lithium-metal oxide may include at least one metal selected from the group consisting of nickel, cobalt, aluminum, and manganese, and the second cathode material of the second secondary battery may include lithium iron phosphate.

The one surface on which the first battery set and the second battery set are disposed adjacent to each other may be a widest surface among the first and second outer surfaces of each of the first battery set and the second battery set.

Each of the first battery set and the second battery set may comprise a plurality, and each of the plurality of first battery sets and each of the plurality of second battery sets may be alternately arranged with respect to each other.

The battery pack may include a first row in which the plurality of first battery sets and the plurality of second battery sets are alternately arranged with each other, and a second row in which the plurality of first battery sets and the plurality of second battery sets are alternately arranged with respect to each other, and a first surface of the first outer surfaces of the first row and a second surface of the second outer surfaces of the second row may be disposed adjacent to each other.

A portion of the first surface corresponding to the first outer surfaces of the first battery set in the first row and a portion of the second surface corresponding to the second outer surfaces of the second battery set in the second row may be adjacent to each other.

A portion of the first surface corresponding to the first outer surfaces of the first battery set in the first row and a portion of the second surface corresponding to the second outer surfaces of the first battery set in the second row may be adjacent to each other.

A portion of the first surface corresponding to the outer surface of the first battery set in the first row and a portion of the second surface corresponding to the outer surface of the second battery set in the second row may be at least partially adjacent to each other.

The plurality of first battery sets may be electrically connected to each other, the plurality of second battery sets may be electrically connected to each other, and the plurality of first battery sets and the plurality of second battery sets may be electrically connected by a switching method.

The first outer surfaces of the first battery set and the second outer surfaces of the second battery set may be in direct contact with each other without other intervening structures on the one surface where the first outer surfaces of the first battery set and the second outer surfaces of the second battery set are adjacent to each other.

In another general aspect, a battery pack including heterogeneous secondary batteries may include: a first battery set in which a plurality of first secondary batteries are stacked; a second battery set in which a plurality of second secondary batteries are stacked, in which each of the first battery set and the second battery set comprises respectivelya plurality of first battery sets and a plurality of second battery sets, and the battery pack has an arrangement structure in which the plurality of first battery sets and the plurality of second battery sets are alternately stacked in one direction.

The plurality of first secondary batteries may have a relatively higher energy density as compared to the plurality of second secondary batteries, and the plurality of second secondary batteries may have relatively better thermal stability and safety as compared to the plurality of first secondary batteries.

In addition, the surface on which the plurality of first battery sets and the plurality of second battery sets are alternately stacked with each other in the one direction may be the widest surface among the outer surfaces of each of the first battery set and the second battery set.

In addition, the cathode material of the first secondary battery may include nickel cobalt manganese (NCM), nickel cobalt manganese aluminum (NCMA), or nickel cobalt aluminum (NCA), and the cathode material of the second secondary battery may be lithium iron phosphate (LFP, LiFePO₄).

In addition, the battery pack may include the first row having the arrangement structure in which the plurality of first battery sets and the plurality of second battery sets are alternately arranged with each other in the one direction, and the second row having the arrangement structure in which the plurality of first battery sets and the plurality of second battery sets are alternately arranged with each other in the one direction, and the first surface of the outer surfaces of the first row and the second surface of the outer surfaces of the second row may be disposed to be in contact with each other.

In addition, a portion of the first surface corresponding to the outer surface of the first battery set in the first row and a portion of the second surface corresponding to the outer surface of the second battery set in the second row may be in contact with each other.

In addition, a portion of the first surface corresponding to the outer surface of the first battery set in the first row and a portion of the second surface corresponding to the outer surface of the second battery set in the second row may be in contact with each other.

In addition, a portion of the first surface corresponding to the outer surface of the first battery set in the first row and a portion of the second surface corresponding to the outer surface of the second battery set in the second row may be at least partially contact each other.

In addition, the plurality of first battery sets may be electrically connected to each other in series, the plurality of second battery sets may be electrically connected to each other in series, and the plurality of first battery sets and the plurality of second battery sets are switched may be electrically connected by the switching method.

In still another general aspect, a battery pack including heterogeneous secondary batteries may include: a first battery set including at least one first secondary battery having a first cathode material; and a second battery set including at least one second secondary battery having a second cathode material different from the first cathode material of the first secondary battery, in which the at least one first secondary battery of the first battery set and the at least one second secondary battery of the second battery set comprise hexahedrons, and a first hexahedron of the first battery set has a first sidewall adjacent to a second hexahedron of the second battery set.

The first cathode material of the first secondary battery may include lithium-metal oxide, the lithium-metal oxide may include a metal of at least one of nickel, cobalt, aluminum, and manganese, and the second cathode material of the second secondary battery may include lithium iron phosphate (LFP, LiFePO4).

The first sidewall may comprise a widest outer wall of any of the hexahedrons.

The at least one first secondary battery of the first battery set may comprise a plurality of first secondary batteries, and the at least one second secondary battery of the second battery set may comprise a plurality of second secondary batteries.

The plurality of first secondary batteries may be arranged between the plurality of second secondary batteries on a same row, and the first sidewall may be on the same row.

The plurality of first secondary batteries and the plurality of second secondary batteries may be arranged stacked over each other on two different rows, and the first sidewall may be between the two different rows.

The plurality of first secondary batteries and the plurality of second secondary batteries may be arranged without any intervening structures in between.

The plurality of first secondary batteries may have a relatively higher energy density as compared to the plurality of second secondary batteries, and the plurality of second secondary batteries may have relatively better excellent thermal stability and safety as compared to the plurality of first secondary batteries.

### BRIEF DESCRIPTION OF DRAWINGS

FIG. 1 is a diagram schematically illustrating a battery pack according to one embodiment of the present invention.
FIG. 2 is a diagram schematically illustrating a battery pack according to another embodiment of the present invention.
FIG. 3 is a diagram schematically illustrating a battery pack according to still another embodiment of the present invention.

### DETAILED DESCRIPTION OF EMBODIMENTS

Hereinafter, embodiments of the present invention will be described in detail with reference to the accompanying drawings.

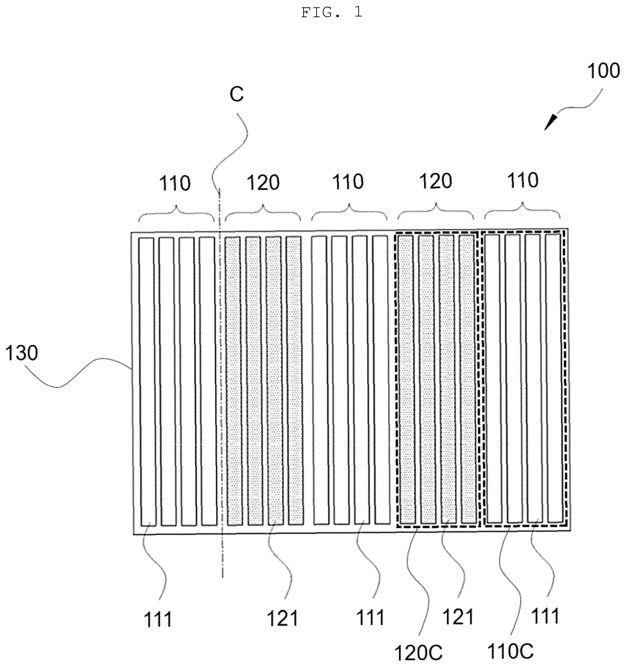

FIG. 1 is a diagram schematically illustrating a battery pack according to one embodiment of the present invention.

Referring to FIG. 1, a battery pack 100 according to this embodiment of the present invention includes heterogeneous secondary batteries. Here, the heterogeneous secondary battery includes two types of secondary batteries divided into a first secondary battery 111 and a second secondary battery 121, but the number of types of secondary batteries may be more diverse without being limited. In this embodiment, the battery pack 100 includes a first battery set 110 including at least one first secondary battery 111 and a second battery set 120 including at least one second secondary battery 121.

In the illustrated embodiment, the first battery set 110 includes at least one first secondary battery 111 arranged in one direction, and the first secondary battery 111 included in the first battery set 110 has the same external shape, for example, a hexahedral shape. A cathode material of the first secondary battery 111 includes lithium-metal oxide, and the metal includes for example at least one of nickel, cobalt, aluminum, and manganese. In one example, the first secondary battery 111 is a lithium secondary battery, and includes a cathode material of nickel cobalt manganese (NCM), nickel cobalt manganese aluminum (NCMA), or nickel cobalt aluminum (NCA). A cathode of the first secondary battery 111 may include lithium-metal oxide, and the metal may include for example nickel, cobalt, and manganese, includes nickel, cobalt, manganese, and aluminum, or includes nickel, cobalt, and aluminum.

In addition, the second battery set 120 may include at least one second secondary battery 121 arranged in one direction, and the second secondary battery 121 included in the second battery set 120 has the same external shape, that is, a hexahedral shape. In one example, the second secondary battery 121 is a lithium secondary battery and includes for example a cathode material including lithium iron phosphate (LPF, LiFePO₄).As another example, the second secondary battery 121 is a lithium secondary battery having a better stability against thermal runaway compared to the first secondary batteries 111 arranged adjacent to each other, and the cathode material of the second secondary battery 121 may include lithium oxide having excellent thermal stability, and the lithium oxide may include at least one element selected for example from manganese (Mn), nickel (Ni), and phosphorus (P). For example, the lithium oxide may be LNMO (LiNixMnyO₄, where y=2-x, and the Ni and Mn ratios are variable), LMO (LiMn₂O₄), or LMPO (LiMnPO₄).

In one embodiment, the first secondary battery 111 in the first battery set 110 has a relatively high energy density compared to the second secondary battery 121, and the second secondary battery 121 in the second battery set 120 has a relatively low energy density compared to the first secondary battery 111, but otherwise has excellent stability against thermal runaway. The second secondary battery 121 normally does not generate heat by itself, and therefore, does not typically cause flammability or an explosion. The above exemplifies that the first secondary battery 111 and the second secondary battery 121 may have different energy density and/or stability characteristics due to a difference in cathode material. A criterion for classifying the first secondary battery 111 and the second secondary battery 121 may be modified within the scope of the present invention in which heterogeneous secondary batteries having different energy densities or stabilities against thermal runaway have an alternating arrangement structure.

The number of first secondary batteries 111 and second secondary batteries 121 included in each of the first battery set 110 and the second battery set 120 may be appropriately set in consideration of a total capacity of the battery pack 100, a supply voltage that the battery pack 100 needs to supply to a load, and the like.

When the battery pack 100 includes the first battery set 110 and the second battery set 120, the first battery set 110 and the second battery set 120 have one surface (e.g., a sidewall surface) of each of the outer surfaces disposed adjacent to each other. In the illustrated embodiment of FIG. 1, the first battery set 110 and the second battery set 120 each have a rectangular parallelepiped external shape having six outer surfaces, and the widest surfaces C among the six outer surfaces are disposed adjacent to each other

In the illustrated embodiment of FIG. 1, the first secondary battery 111 and the second secondary battery 121 each have a rectangular parallelepiped external shape, and are disposed to be in close contact with each other in one direction such that the widest surfaces among the six outer surfaces of the rectangular parallelepiped are in contact with each other. At least one second secondary battery 121 is interposed between the plurality of first secondary batteries 111 arranged in one direction. The heat transfer between the plurality of first secondary batteries 111 is blocked by the second secondary battery 121 interposed therebetween, so the instability due to heat generation, explosion, or the like inherent in the plurality of first secondary batteries 111 is improved.

In addition, in one embodiment, the outer surface of the first secondary battery 111 and the outer surface of the second secondary battery 121 are in direct contact with each other on the surface C where the first secondary battery 111 and the second secondary battery 121 are adjacent to each other without the intervention of other components such as a heat insulating plate. In one embodiment, the outer surface of the first battery set 110 and the outer surface of the second battery set 120 are in direct contact with each other on the surface where the outer surface of the first battery set 110 and the outer surface of the second battery set 120 are adjacent to each other without the intervention of other components. In this case, the outer surface of the first battery set 110 and the outer surface of the second battery set 120 may be the outer surface of the first secondary battery and the outer surface of the second secondary battery, respectively, as illustrated, but when the first battery set 110 and the second battery set 120 include module cases 110C and 120C surrounding cells, respectively, the outer surface of the first battery set 110 and the outer surface of the second battery set 120 may be the outer surfaces of the module cases 110C and 120C.

When the battery pack is formed of only the plurality of first secondary batteries 111, a heat blocking or transfer member (e.g., a ceramic sheet as a thermal runaway preventing member) such as a heat insulating plate is interposed between the batteries, but according to one embodiment of the present invention, since heterogeneous secondary batteries having different characteristics are alternately arranged, some or all of the heat blocking or transfer members such as an insulating plate may be omitted in the battery pack.

In another embodiment, the battery pack 100 includes a plurality of first battery sets 110, a plurality of second battery sets 120, and a battery pack case 130. As illustrated in FIG. 1, the battery pack 100 is configured such that a plurality of first battery sets 110 and a plurality of second battery sets 120 are alternately arranged within the battery pack case 130. In this case, the first battery set 110 is arranged at both ends in the battery pack case 130, and the second battery set 120 is interposed between the first battery sets 110. Accordingly, the number of first battery sets 110 is configured to be one more than the number of second battery sets 120.

The first battery set 110 has a structure in which a plurality of first secondary batteries 111 are stacked in one direction. The second battery set 120 has a structure in which the plurality of second secondary batteries 121 are stacked in one direction. The plurality of first secondary batteries 111 and the plurality of second secondary batteries 121 each have the same shape of a hexahedron, and are stacked in one direction on the module cases 110C and 120C each having a hexahedral inner wall. The plurality of first battery sets 110 and the plurality of second battery sets 120 also have an overall shape of a hexahedron.

In the illustrated embodiment of FIG. 1, the number of first secondary batteries 111 and second secondary batteries 121 stacked on each of the first battery set 110 and the second battery set 120 is the same, but the present invention is not limited thereto. The number of first secondary batteries 111 and second secondary batteries 121 stacked in each of the first battery set 110 and the second battery set 120 may be appropriately set in consideration of a total capacity of the battery pack 100, a supply voltage that the battery pack 100 needs to supply to a load, and the like.

When the plurality of first battery sets 110 and the plurality of second battery sets 120 are alternately stacked in the case 130 in one direction, a stacked surface where the plurality of first battery sets 110 and the plurality of second battery sets 120 are adjacent to each other corresponds to the widest surface among the outer surfaces of each of the first battery set 110 and the second battery set 120. The stacked surface corresponds to a surface C adjacent to the first secondary battery 111 and the second secondary battery 121.

The battery pack 100 in which the plurality of first battery sets 110 and the plurality of second battery sets 120 are alternately arranged in the case may supply power to a constant load, for example, a motor driving load such as for example a hybrid electric vehicle or an electric vehicle. In this case, the plurality of first battery sets 110 in the battery pack 100 are electrically connected to each other, the plurality of second battery sets 120 are electrically connected to each other, and the plurality of first battery sets 110 and the plurality of second battery sets 120 may be electrically connected or not electrically connected in series or parallel by a switching method using one or more switches. The plurality of first battery sets 110 and the plurality of second battery sets 120 are respectively charged and discharged by separate switching operations.

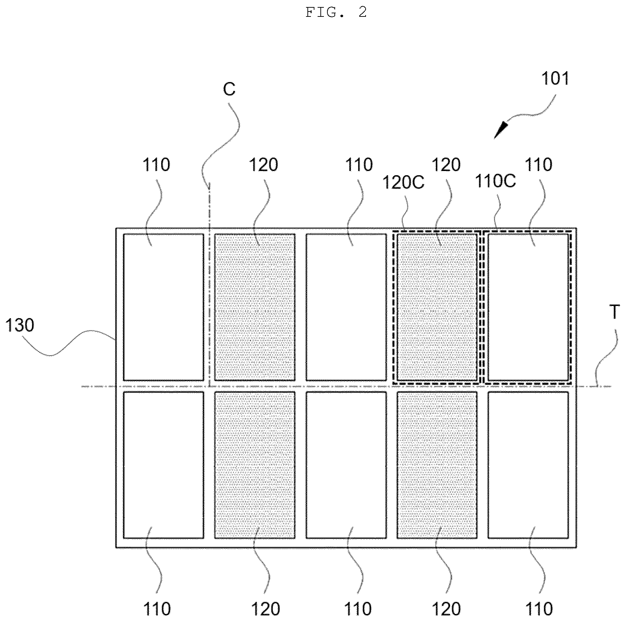

FIG. 2 is a diagram schematically illustrating a battery pack according to another embodiment of the present invention.

Referring to FIG. 2, a battery pack 101 according to another embodiment of the present invention includes a plurality of rows in which the plurality of first battery sets 110 and the plurality of second battery sets 120 are alternately arranged with each other. As illustrated in FIG, 2, the battery pack 101 includes a first row in which the plurality of first battery sets 110 and the plurality of second battery sets 120 are alternately arranged with each other, and a second row that has the same arrangement structure as the first row. The number of rows is not limited to those shown, and rows can be added.

The plurality of first battery sets 110 and the plurality of second battery sets 120 each include a plurality of first secondary batteries and a plurality of second secondary batteries, and are modularized by including a module cases 110C and 120C that houses the included cells. In one embodiment, the module case 110C and the first battery set 110 housed therein, and the module case 120C and the second battery set 120 housed therein each correspond to a battery module constituting one unit of the battery pack.

The plurality of first battery sets 110 may have an internal structure in which the plurality of first secondary batteries are stacked in one direction, and the plurality of first secondary batteries have relatively higher energy density than the plurality of second secondary batteries. The plurality of first secondary batteries may be lithium secondary batteries having high energy density characteristics as described in the above embodiment. In one example, the cathode material of the plurality of first secondary batteries includes for example nickel cobalt manganese (NCM), nickel cobalt manganese aluminum (NCMA), or nickel cobalt aluminum (NCA). That is, the cathode material of the first secondary battery includes for example lithium-metal oxide, the metal includes for example nickel and cobalt, and further includes for example at least one of aluminum and manganese.

The plurality of second battery sets 120 may have an internal structure in which the plurality of second secondary batteries are stacked in one direction, and the plurality of second secondary batteries may have a relatively excellent safety against thermal runaway as compared to the plurality of first secondary batteries. In one embodiment, the plurality of second secondary batteries are lithium secondary batteries having excellent stability characteristics as in the description of the embodiment above. For example, the cathode material of the plurality of second secondary batteries may include lithium iron phosphate (LiFePO₄).

The number of first secondary batteries 111 and second secondary batteries 121 included in each of the first battery set 110 and the second battery set 120 may be appropriately set in consideration of a total capacity of the battery pack 100, a supply voltage that the battery pack 100 needs to supply to a load, and the like.

In the illustrated embodiment of FIG. 2, each of the plurality of first battery sets 110 and the plurality of second battery sets 120 has a hexahedral shape and is arranged inside the battery pack case 130 having a hexahedral inner wall. In this case, the battery pack 101 includes a first row and a second row in which the plurality of first battery sets 110 and the plurality of second battery sets 120 are alternately arranged with each other in the battery pack case 130. In this embodiment in the first row, the first battery set 110 is arranged at both ends in the battery pack case 130, and the second battery set 120 is interposed between the first battery sets 110. In addition, in this embodiment in the second row, the first battery set 110 is arranged at both ends in the battery pack case 130, and the second battery set 120 is interposed between the first battery sets 110. Accordingly, the number of first battery sets 110 is greater than the number of second battery sets 120.

When each of the first row and the second row is formed of the first battery set 110 and the second battery set 120, one of the outer surfaces of the first battery set 110 and the second battery set 120 is disposed adjacent to each other. In the illustrated embodiment of FIG. 2, the first battery set 110 and the second battery set 120 each have an outer shape of a rectangular parallelepiped having six outer surfaces, and the widest surfaces C among the six outer surfaces are disposed adjacent to each other.

When each of the first row and the second row is formed of the first battery set 110 and the second battery set 120, on the surface on which the first battery set 110 and the second battery set 120 are arranged adjacent to each other, that is, the surface on which the first battery set 110 and the second battery set 120 are stacked and contact each other, the outer surface of the first battery set 110 and the outer surface of the second battery set 120 are in direct contact with each other without intervening other components. Therefore, in order for heat generated by heat generation or ignition in any one of the first battery sets 110 in the first row or the second row to propagate to the other first battery sets 110, the heat has to pass through the second battery set 120 interposed therebetween. In this case, the second battery set interposed between the first battery sets acts as a heat insulating plate, that is a barrier preventing heat transfer between the first battery sets.

In the present embodiment, when the first row and the second row are arranged in the case of the battery pack 101, the first row and the second row are arranged side by side, and a first surface T (e.g., a top or bottom surface) among the outer surfaces of the first row and a second surface T among the outer surfaces of the second row are disposed adjacent to each other. As illustrated in FIG. 2, a vertically-extending portion of the first surface corresponding to the outer surface of the first battery set in the first row and a vertically-extending portion of the second surface corresponding to the outer surface of the first battery set in the second row are disposed adjacent to each other.

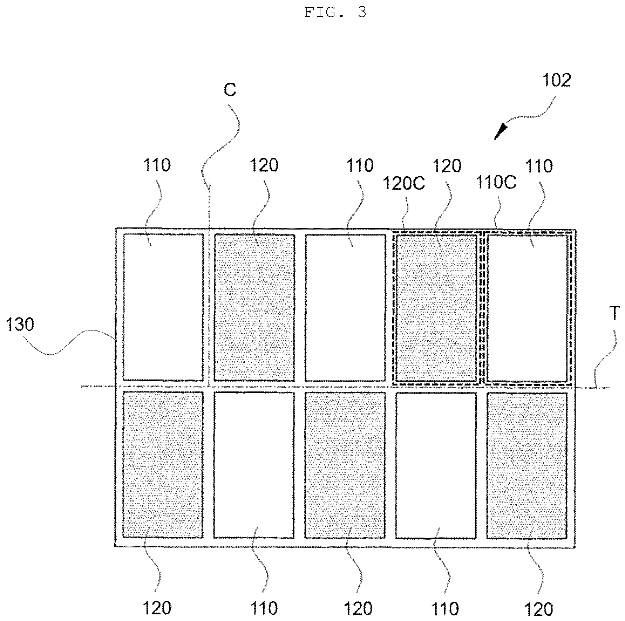

FIG. 3 is a diagram schematically illustrating a battery pack according to another embodiment of the present invention.

Referring to FIG. 3, similarly to the battery pack 101 of the previous embodiment shown in FIG. 2, the battery pack 102 according to another embodiment of the present invention includes the first row in which the plurality of first battery sets 110 and the plurality of second battery sets 120 are alternately arranged with each other and the second row in which the plurality of first battery sets 110 and the plurality of second battery sets 120 are alternately arranged with each other. When the first row and the second row are arranged in the case of the battery pack 102, the first row and the second row are arranged side by side, and a first surface T among the outer surfaces of the first row and a second surface T among the outer surfaces of the second row are disposed adjacent to each other.

As illustrated in FIG. 3, unlike the battery pack 101 of the previous embodiment shown in FIG. 2, the battery pack 102 of the present example has an arrangement structure in which, when the first surface T of the first row and the second surface of the second row are disposed adjacent to each other, both a horizontally-extending portion and a vertically-extending portion of the first surface corresponding to the outer surface of the first battery set in the first row and a horizontally-extending portion and a vertically-extending portion of the second surface corresponding to the outer surface of the second battery set in the second row are adjacent to each other.

In the battery pack 102 of the present example, the number of surfaces adjacent to the outer surface of the second battery set 120 among the outer surfaces of the first battery set is greater than that of the battery pack 101 of the previous example. The battery pack 101 of the previous example has the greater number of first battery sets 110 having a higher energy density than the battery pack 102 of the present example.

As an example different from the battery packs 101 and 102, when the first surface of the first row and the second surface of the second row are disposed adjacent to each other, the battery pack may have an arrangement structure in which a portion of a first surface corresponding to an outer surface of a first battery set in a first row and a portion of the second surface corresponding to an outer surface of a second battery set in a second row are at least partially adjacent to each other.

In the battery packs 101 and 102 and other examples above, on the surface where the first surface of the first row and the second surface of the second row are adjacent to each other, the outer surfaces of the first battery set are in direct contact with each other without other structures intervening with portions of the outer surface of the first battery set, the outer surface of the second battery set, and the outer surfaces of the first and second battery sets.

The number of first and second secondary batteries included in each of the first battery set 110 and the second battery set 120 may be appropriately set in consideration of the total capacity of the battery pack and the supply voltage that the battery pack should supply to the load, etc.

The battery packs 101 and 102 and the battery packs according to the other examples may supply power to a constant load, for example, a motor driving load such as a hybrid electric vehicle or an electric vehicle. In this case, the plurality of first battery sets 110 in the battery pack 100 are electrically connected to each other, the plurality of second battery sets 120 are electrically connected to each other, and the plurality of first battery sets 110 and the plurality of second battery sets 120 may be electrically connected or not electrically connected in series or parallel by a switching method using one or more switches. The plurality of first battery sets 110 and the plurality of second battery sets 120 are respectively charged and discharged by separate switching operations.

A battery pack according to various embodiments of the present disclosure includes heterogeneous secondary batteries of a first secondary battery having high energy density and a second secondary battery having excellent stability, and by adjusting the number of first secondary batteries included in the first battery set and the number of second secondary batteries included in the second battery set, it is possible to improve the lifespan of the battery pack compared to a conventional battery pack formed only of the first secondary battery having a high energy density. The state of health (SOH) is an index indicating how much the battery capacity has decreased from the initial battery capacity, and is an index indicating the remaining life or deterioration conduction of the battery over time, which is indicated by %.

**[Table 1]**

| | 1000 Cycle | 2000 Cycle | 3000 Cycle |
|---|---|---|---|
| Battery pack in which first secondary battery and second secondary battery are mixed | 92.5% | 85% | 77.5% |
| Conventional battery pack formed only of first secondary battery | 90% | 80% | 70% |

Table 1 shows the SOH after 1000, 2000, and 3000 charge/discharge cycles in the conventional battery pack formed only of the first secondary battery having high energy density and the battery pack according to the present invention.

The battery pack in which the first secondary battery and the second secondary battery are mixed has the arrangement structure of the heterogeneous secondary batteries in the battery pack according to various embodiments of the present invention, and corresponds to one embodiment of the present invention in which the number of first secondary batteries included in the first battery set and the number of second secondary batteries included in the second battery set are adjusted so that the plurality of first battery sets occupies 70% of SOC(State of Charge) of the entire battery pack and the plurality of second battery sets occupies 30% of SOC(State of Charge) of the entire battery pack.

Referring to Table 1, the SOH of the battery pack according to the present invention is higher than that of the conventional battery pack formed only of the first secondary battery having a high energy density. That is, by mixing the first secondary battery and the second secondary battery (LFP battery), the lifespan of the entire battery pack is improved.

In the battery pack according to one embodiment of the present invention, by arranging a secondary battery with excellent stability against heat and explosion between secondary batteries with high energy density, it is possible to ensure not only an energy density capable of supplying power to a load but also stability in abnormal thermal propagation.

In the battery pack according to one embodiment of the present invention, it is possible to increase a volume ratio occupied by a secondary battery in a battery pack by omitting a thermal runaway preventing member provided in the conventional battery pack.

Although the present invention has been described with reference to embodiments shown in the accompanying drawings, it is only an example. It will be understood by those skilled in the art that various modifications and other equivalent exemplary embodiments are possible from the present invention. Therefore, the actual technical scope of the present invention is defined by the disclosure and the equivalents.

## Claims

1. A battery pack including heterogeneous secondary batteries, comprising:
a first battery set including at least one first secondary battery having a first cathode material, wherein the first battery set has first outer surfaces; and
a second battery set including at least one second secondary battery having a second cathode material different from the first cathode material of the first secondary battery, wherein the second battery set has second outer surfaces,
wherein the first battery set and the second battery set have one surface of the first outer surfaces disposed adjacent to another surface of the second outer surfaces.

2. The battery pack of claim 1, wherein the first cathode material of the first secondary battery includes lithium-metal oxide,
the lithium-metal oxide includes at least one metal selected from the group consisting of nickel, cobalt, aluminum, and manganese, and
the second cathode material of the second secondary battery includes lithium iron phosphate.

3. The battery pack of claim 1, wherein the one surface on which the first battery set and the second battery set are disposed adjacent to each other is a widest surface among the first and second outer surfaces of each of the first battery set and the second battery set.

4. The battery pack of claim 1, wherein each of the first battery set and the second battery set comprises a plurality of first battery sets and a plurality of second battery sets, and
each of the plurality of first battery sets and each of the plurality of second battery sets are alternately arranged with respect to each other.

5. The battery pack of claim 4, wherein the battery pack includes a first row in which the plurality of first battery sets and the plurality of second battery sets are alternately arranged with each other, and a second row in which the plurality of first battery sets and the plurality of second battery sets are alternately arranged with respect to each other, and
a first surface of the first outer surfaces of the first row and a second surface of the second outer surfaces of the second row are disposed adjacent to each other.

6. The battery pack of claim 5, wherein a portion of the first surface corresponding to the first outer surfaces of the first battery set in the first row and a portion of the second surface corresponding to the second outer surfaces of the second battery set in the second row are adjacent to each other.

7. The battery pack of claim 5, wherein a portion of the first surface corresponding to the first outer surfaces of the first battery set in the first row and a portion of the second surface corresponding to the second outer surfaces of the first battery set in the second row are adjacent to each other.

8. The battery pack of claim 5, wherein a portion of the first surface corresponding to the first outer surfaces of the first battery set in the first row and a portion of the second surface corresponding to the second outer surfaces of the second battery set in the second row are at least partially adjacent to each other.

9. The battery pack of claim 4, wherein the plurality of first battery sets are electrically connected to each other,
the plurality of second battery sets are electrically connected to each other, and
the plurality of first battery sets and the plurality of second battery sets are electrically connected by a switching method.

10. The battery pack of claim 4, wherein the first outer surfaces of the first battery set and the second outer surfaces of the second battery set are in direct contact with each other without other intervening structures on the one surface where the first outer surfaces of the first battery set and the second outer surfaces of the second battery set are adjacent to each other.

11. A battery pack including heterogeneous secondary batteries, comprising:
a first battery set in which a plurality of first secondary batteries are stacked; and
a second battery set in which a plurality of second secondary batteries are stacked;
wherein each of the first battery set and the second battery set comprises respectively a plurality of first battery sets and a plurality of second battery sets, and
the battery pack has an arrangement structure in which the plurality of first battery sets and the plurality of second battery sets are alternately stacked in one direction.

12. The battery pack of claim 11, wherein the plurality of first secondary batteries have a relatively higher energy density as compared to the plurality of second secondary batteries, and
the plurality of second secondary batteries have relatively better thermal stability and safety as compared to the plurality of first secondary batteries.
